# EUROPEAN PATENT APPLICATION

(11) **EP 4 811 791 A1**
(43) Date of publication of application: **23.09.2026**
(21) Application number: 25305362.3
(22) Date of filing: 18.03.2025
(51) Int. Cl.: H04N 19/60, H04N 19/70

(54) **HYBRID IMPLICIT NEURAL NETWORK WITH SELECTIVE CODING OF LATENT VARIABLES**

(71) Applicant: InterDigital CE Patent Holdings, SAS, 75017 Paris (FR)
(72) Inventor: SCHNITZLER, Francois, 56890 SAINT AVE (FR); LO BIANCO, Federico, 35700 RENNES (FR); GALPIN, Franck, 35235 THORIGNE-FOUILLARD (FR)
(74) Representative: Vossius & Partner Patentanwälte Rechtsanwälte mbB

(57) **Abstract**

Apparatuses and methods are disclosed for encoding and decoding data frames. The encoding comprises training a hybrid INR network to produce a data region of a frame from latent variables. The training determines the parameters of the hybrid INR network based on a coding cost being a function of the latent variables modified by corresponding elements of a mask. The encoding further comprises selecting, using the mask, a subset of the latent variables, and coding into the bitstream the selected subset of the latent variables as well as the parameters of the hybrid INR network and the mask. The decoding comprises decoding from the bitstream the parameters of the hybrid INR network and the mask that indicates the subset of the latent variables. The latent variables are then obtained, where a latent variable belonging to the subset is decoded from the bitstream based on its distribution and a latent variable not belonging to the subset is derived based on its distribution. The data region of the frame is produced by the hybrid INR network from the obtained latent variables using the decoded parameters of the hybrid INR network.

## Description

### BACKGROUND

An implicit neural representation (INR) network is a neural network that is trained to represent specific data; the INR network is trained to predict a data sample (e.g., a pixel of an image or a voxel of a volume) when presented with that data sample's spatial coordinates. A hybrid INR network improves the INR network's capability to learn local patterns in the data. To that end, coordinates of the data samples are first mapped into latent variables and the INR network is trained to represent the data based on these latent variables. When the hybrid INR network is applied to data compression, the latent variables (together with other parameters of the network) represent the data in the bitstream. To reduce the bitrate associated with the latent variables, the latent variables are entropy-coded based on their estimated distributions. However, techniques are required to more efficiently represent the data by latent variables.

### SUMMARY

Aspects disclosed in the present disclosure describe methods for encoding data. These methods include encoding into a bitstream a data region of a currently encoded frame. The encoding comprises training a hybrid INR network to produce the data region from latent variables. The training determines the parameters of the hybrid INR network based on a coding cost that is a function of the latent variables modified by corresponding elements of a mask. The encoding further comprises selecting, using the mask, a subset of the latent variables, coding into the bitstream the selected subset of the latent variables (based on their respective distributions) as well as the parameters of the hybrid INR network and the mask.

Aspects disclosed in the present disclosure also describe methods for decoding data. These methods include decoding from a bitstream a data region of a currently decoded frame. The decoding comprises decoding from the bitstream parameters of a hybrid INR network. The parameters are determined by training the hybrid INR network to produce the data region from latent variables. The decoding further comprises decoding from the bitstream a mask indicating a subset of the latent variables. The latent variables are then obtained, wherein a latent variable belonging to the subset is decoded from the bitstream based on its respective distribution and a latent variable not belonging to the subset is derived based on its respective distribution. The data region (to be decoded) is produced by the hybrid INR network from the obtained latent variables using the decoded parameters of the hybrid INR network.

Aspects disclosed in the present disclosure describe apparatuses for encoding data. The apparatuses comprise at least one processor and memory storing instructions. The instructions, when executed by the at least one processor, cause the apparatuses to encode into a bitstream a data region of a currently encoded frame. The encoding comprises training a hybrid INR network to produce the data region from latent variables. The training determines the parameters of the hybrid INR network based on a coding cost that is a function of the latent variables modified by corresponding elements of a mask. The encoding further comprises selecting, using the mask, a subset of the latent variables, coding into the bitstream the selected subset of the latent variables (based on their respective distributions) as well as the parameters of the hybrid INR network and the mask.

Aspects disclosed in the present disclosure also describe apparatuses for decoding data. The apparatuses comprise at least one processor and memory storing instructions. The instructions, when executed by the at least one processor, cause the apparatuses to decode from a bitstream a data region of a currently decoded frame. The decoding comprises decoding from the bitstream parameters of a hybrid INR network. The parameters are determined by training the hybrid INR network to produce the data region from latent variables. The decoding further comprises decoding from the bitstream a mask indicating a subset of the latent variables. The latent variables are then obtained, wherein a latent variable belonging to the subset is decoded from the bitstream based on its respective distribution and a latent variable not belonging to the subset is derived based on its respective distribution. The data region (to be decoded) is produced by the hybrid INR network from the obtained latent variables using the decoded parameters of the hybrid INR network

Aspects disclosed in the present disclosure describe a non-transitory computer-readable medium comprising instructions executable by at least one processor to perform methods for encoding data. These methods include encoding into a bitstream a data region of a currently encoded frame. The encoding comprises training a hybrid INR network to produce the data region from latent variables. The training determines the parameters of the hybrid INR network based on a coding cost that is a function of the latent variables modified by corresponding elements of a mask. The encoding further comprises selecting, using the mask, a subset of the latent variables, coding into the bitstream the selected subset of the latent variables (based on their respective distributions) as well as the parameters of the hybrid INR network and the mask.

Aspects disclosed in the present disclosure also describe a non-transitory computer-readable medium comprising instructions executable by at least one processor to perform methods for decoding data. These methods include decoding from a bitstream a data region of a currently decoded frame. The decoding comprises decoding from the bitstream parameters of a hybrid INR network. The parameters are determined by training the hybrid INR network to produce the data region from latent variables. The decoding further comprises decoding from the bitstream a mask indicating a subset of the latent variables. The latent variables are then obtained, wherein a latent variable belonging to the subset is decoded from the bitstream based on its respective distribution and a latent variable not belonging to the subset is derived based on its respective distribution. The data region (to be decoded) is produced by the hybrid INR network from the obtained latent variables using the decoded parameters of the hybrid INR network.

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

### BRIEF DESCRIPTION OF THE DRAWINGS

FIG. 1 is a block diagram of an example system, according to which aspects of the present embodiments can be implemented.
FIG. 2 is a diagram illustrating an example INR network, according to which aspects of the present embodiments can be implemented.
FIG. 3 is a block diagram of an example video encoder, according to which aspects of the present embodiments can be implemented.
FIG. 4 is a block diagram of an example video decoder, according to which aspects of the present embodiments can be implemented.
FIG. 5 is a diagram illustrating a hybrid INR network, according to which aspects of the present embodiments can be implemented.
FIG. 6 is a block diagram illustrating an example video encoder applying a hybrid INR network, according to which aspects of the present embodiments can be implemented.
FIG. 7 is a block diagram illustrating an example video decoder applying a hybrid INR network, according to which aspects of the present embodiments can be implemented.
FIG. 8 is a block diagram illustrating prediction of a latent variable distribution, using a spatial context, according to which aspects of the present embodiments can be implemented.
FIG. 9 is a block diagram illustrating layers of latent variables and corresponding layers of a mask, according to which aspects of the present embodiments can be implemented.
FIG. 10 is a block diagram illustrating an example video encoder applying a hybrid INR network with selective coding of latent variables, according to which aspects of the present embodiments can be implemented.
FIG. 11 is a block diagram illustrating an example video decoder applying a hybrid INR network with selective coding of latent variables, according to which aspects of the present embodiments can be implemented.
FIG. 12 is a flowchart of an example method for encoding data, according to which aspects of the present embodiments can be implemented.
FIG. 13 is a flowchart of an example method for decoding data, according to which aspects of the present embodiments can be implemented.

### DETAILED DESCRIPTION

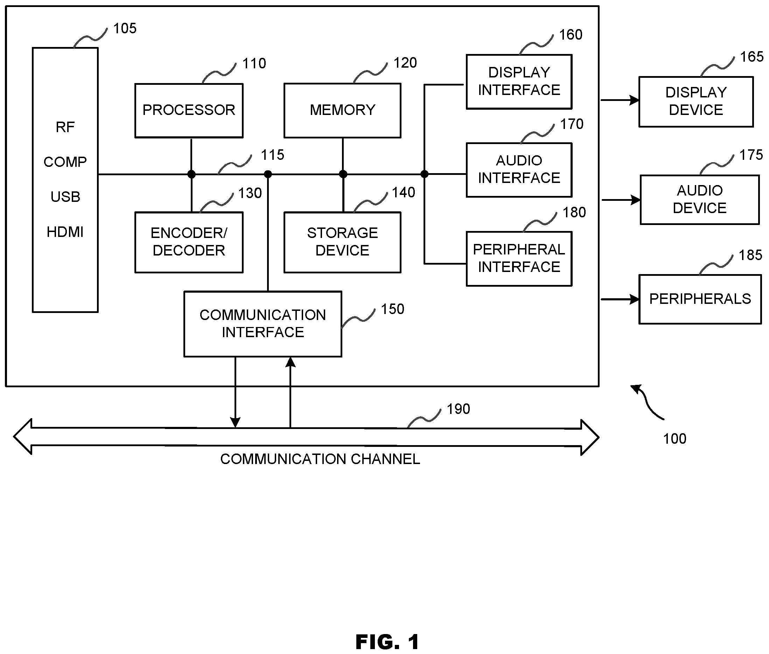

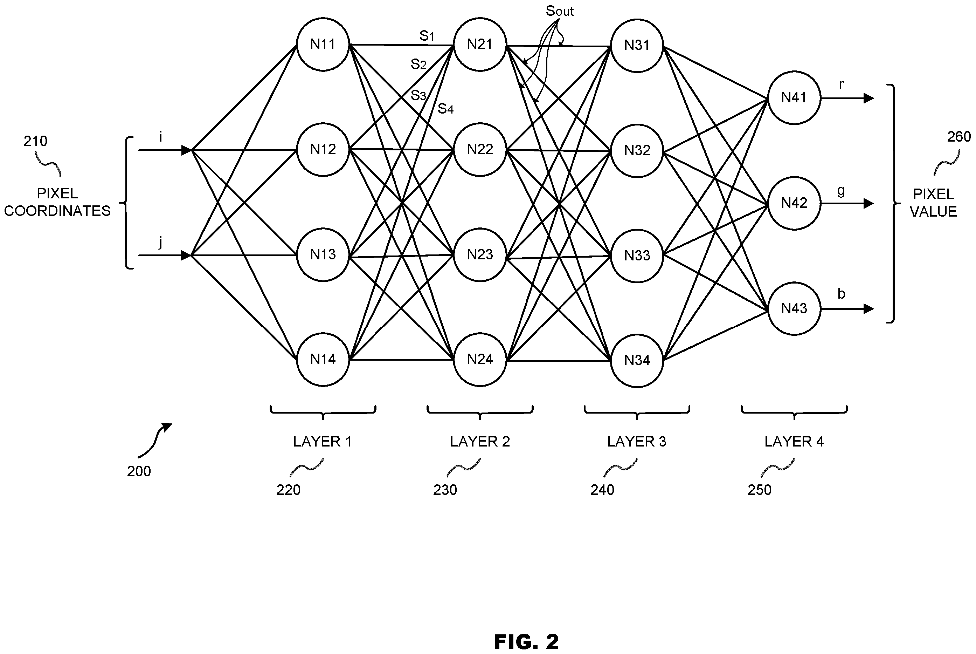

Apparatuses and methods are described herein for encoding and decoding data applying a hybrid INR network. A system for processing and displaying content, with which various aspects and examples described herein may be implemented, is generally described in reference to FIG. 1, followed by a description of the aspects of the present disclosure in reference to FIGS. 2-13.

FIG. 1 is a block diagram of an example system, according to which aspects of the present embodiments can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

Generally, video codecs can be classified into conventional codecs, autoencoders, and overfitted codecs. Conventional codecs, currently the most common ones, are based on predictive coding, such as those following the advance video coding (H.264/AVC), the high efficiency video coding (HEVC), or the versatile video coding (VVC) standards. In contrast, an autoencoder is a neural network that is trained to map input images (video frames) into respective sets of latent variables and then map back those sets of latent variables to approximate versions of the input images. During training, the autoencoder parameters are optimized to minimize a rate-distortion cost function. Thus, using a trained autoencoder, encoding an image involves mapping the image into a set of latent variables and decoding the image involves mapping that set of latent variables into a reconstructed version of the image. Since autoencoders are generically trained (that is, their training is based on a large number of images), to compete with the performance of conventional codecs, for example, their complexity (the number of parameters and multiplications involved per pixel) is high. Relative to autoencoders, overfitted codecs, using INR networks, offer lower complexity while still achieving the performance levels of conventional codecs.

Representing data via INR networks is a relatively new technology that has only recently been investigated by the computer vision and computer graphics communities. INR networks are studied for applications of compression, where an efficient representation of signals (such as, still images, videos, surfaces, and volumes) is required. In contrast to an autoencoder, an INR network is trained to represent a specific signal. Hence, unlike autoencoders, an INR-based codec is not generic but is adapted (overfitted) to the signal to be coded and is, therefore, more efficient. Moreover, since the INR network is trained to predict a signal based on the signal's coordinates, the trained network can be applied to progressively reconstruct the signal based on any set of coordinates (e.g., a subset of the coordinates used in the training, or any other set of extrapolated or interpolated coordinates therefrom). For the simplicity of the presentation, aspects of INR network applications are described herein with respect to images (e.g., video frames); however, these aspects are extendable to other data frames, such as those representing surfaces of objects and volumetric data that may be changing overtime.

FIG. 2 is a diagram illustrating an example INR network 200. An INR network is a neural network composed of multiple layers, each layer includes multiple nodes (denoted by circles). Generally, the architecture of a neural network is characterized by the number of layers, the number of layers' nodes, and by the way the layers' nodes are connected. In the example of FIG. 2, the network 200 has four layers 220, 230, 240, 250 that are fully connected. For example, the first layer 220 includes four nodes N11, N12, N13, and N14 that each receives the coordinate values (*i,j*) 210 of a pixel x and each outputs an output signal that, in tum, feeds the nodes of the next layer, N21, N22, N23, and N24. Likewise, the second layer 230 includes four nodes N21, N22, N23, and N24, that each receives the output signals of nodes from the previous layer, N11, N12, N13, and N14, and each outputs an output signal that, in turn, feeds the nodes of the next layer, N31, N32, N33, and N34. The fourth layer 250 includes three nodes N41, N42, and N43 that each receives the output signals of the nodes from the previous layer, N31, N32, N33, N34 and each outputs a color component value 260 of the pixel *x*, respectively, *r, g,* and *b* (or color component values of any other color model, such as *y*, *u,* and *v*)*.*

Each node in the network 200 represents an operator that generates an output signal based on the node's inputs. For example, node N21 of the second layer 230 receives as an input the output signals of nodes N11, N12, N13, and N14, respectively, *s*₁, *s₂, s*₃*,* and *s*₄. These inputs are translated into an output signal *sₒᵤₜ* that feeds the nodes of the third layer 240. A node's operator can be expressed as follows: ${s}_{out} = A \left({p}_{0}+{\sum }_{i = 1}^{L} {p}_{i} ⋅ {s}_{i}\right) ,$ where, *L* denotes the number of input signals (i.e., the number of nodes from the previous layer that connect to the node), *s* = {*sᵢ* : *i =* 1 *to L*} denotes the node's input signal vector, *sₒᵤₜ* denotes the node's output signal, *p* = {*pᵢ* : *i =* 0 *to L*} denotes the node's parameter vector (or weight vector), and *A* denotes an activation function (e.g., ReLU, Sigmoid, or Tanh). The weight vectors (and parameters of the activation functions, if such parameters exist) of respective nodes are collectively referred to as the parameters *θ* of the network 200. These parameters *θ* are determined through a training process. The network operation, denoted by *f_{θ},* is therefore defined by the network parameters *θ*.

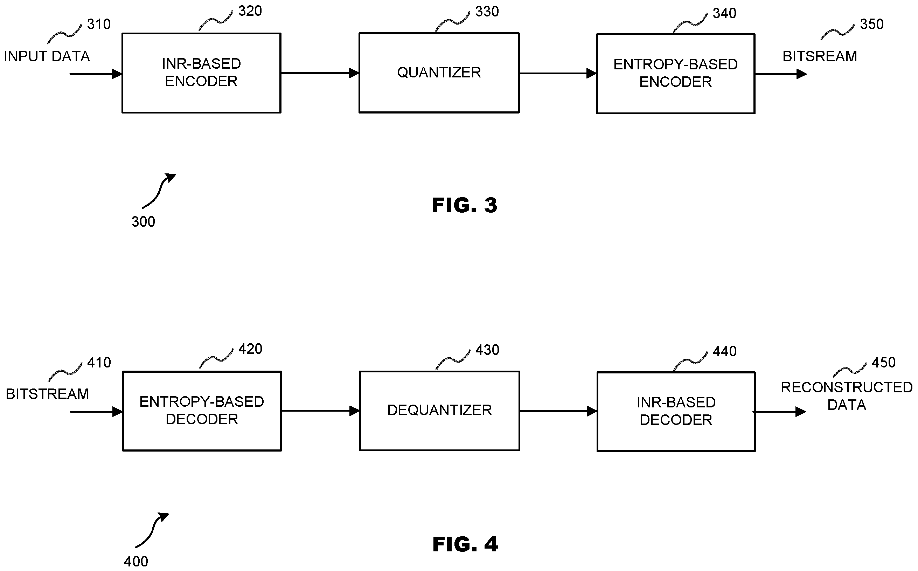

Hence, an INR network 200 is trained to predict a pixel value of an image, ***x***(*i, j*), based on the pixel's coordinates (*i,j*) - that is, *f_{θ}*(*i,j*) = (*r, g, b*) (or *f_{θ}*(*i,j*) = (*y, u, v*))*.* During a training phase of an INR network 200, the parameters *θ* (or a subset of them) are determined. This is done via an optimization process through which the parameters *θ* that minimize a cost function can be determined. For example, the following cost function can be used: $Cost = D \left(x, {f}_{θ}\right) + λR \left(θ\right)$ where, *D* is a distortion, measuring the fidelity of the estimated pixel values, provided by *f**_{θ}**,* relative to the ground truth, that is, the corresponding pixel values from the original image, denoted by ***x***. And, where *R* is the resulting bitrate of the encoded parameters *θ* (e.g., encoded by quantization and entropy coding as discussed with respect to FIG. 3). A trade-off parameter *λ* can be set to determine the balance between *D* and *R*. Note that the distortion *D* can be any metric that measure the distance (or similarity) between the original image ***x*** and its estimated version provided by *f_{θ},* such as a mean squared error metric or a learned perceptual image patch similarity (LPIPS) metric. For example, a mean squared error metric can be expressed as: ${D}_{MSE} = \frac{1}{WH} {\sum }_{i ∈ W , j ∈ H} {\left(x\left(i, j\right)-{f}_{θ}\left(i, j\right)\right)}^{2} ,$ where, *W* and *H* are the width and height of the image *x* that the INR network is trained to predict. The optimization of the network parameters *θ*, according to equation (2), is typically performed by a machine learning optimization technique, applying, for example, a batch gradient descent algorithm. Following the training of the hybrid INR network 200 and using the optimal parameters *θ* (obtained via the optimization process), the INR network can be applied to predict a pixel value based on its corresponding coordinate values.

Using INR networks for the application of encoding and decoding images is further described with respect to FIGS. 3 and 4.

FIG. 3 is a block diagram of an example video encoder 300. In the example of FIG. 3, the video encoder 300 includes an INR-based encoder 320, a quantizer 330, and an entropy-based encoder 340. The INR-based encoder 320 receives an input data 310 to be coded. The input data 310 can be data associated with a frame of video (an image), a frame of a surface representation of an object, or a frame of volumetric data. To code the input data 310, the INR-based encoder 320 trains an INR network (e.g., the INR network 200 described herein). Specifically, based on the input data 310, the INR-based encoder 320 optimizes a cost function associated with the function *f_{θ},* representative of the INR network, to determine the optimal network parameters *θ*. For example, for an input image with dimensions *W* and *H, W* times *H* pairs of pixel coordinates (*i,j*) and corresponding pixel values ***x***(*i, j*) can be used to train the INR network according to equation (2). The optimal parameters, generated by the INR-based encoder 320, are then quantized by the quantizer 330, and then the quantized parameters are entropy-coded, by the entropy-based encoder 340, into a bitstream 350. Alternatively, the optimal parameters, generated by the INR-based encoder 320, can be coded using neural compression codecs such as Neural Network Coding (NNC)/ ISO/IEC 15938-17 or MPEG-7 part 17. The bitstream 350 can be used by a decoder to reconstruct the input image 310, as described in reference to FIG. 4.

FIG. 4 is a block diagram of an example video decoder 400. The decoder 400 generally reverses the operation of the encoder 300 of FIG. 3. In the example of FIG. 4, the video decoder 400 includes an entropy-based decoder 420, a dequantizer 430, and an INR-based decoder 440. As illustrated, the decoder 400 receives the bitstream 410, 350 (generated by the encoder 300) and entropy-decodes therefrom the quantized INR network parameters. The dequantizer 430 is then employed to dequantize these quantized INR network parameters, resulting in a restored version of the INR network parameters to be provided to the INR-based decoder 440.

The INR-based decoder 440 applies the trained INR network, defined by the restored INR network parameters, to generate the reconstructed data 450. For example, to decode an input image, the INR-based decoder 440 uses the INR network to predict the value of (or to evaluate *f_{θ}* using the coordinates of) any pixel of the input image. Thus, the decoder 400 can be applied to: 1) reconstruct the whole encoded image 310; 2) to reconstruct only a region of the encoded image; or 3) to progressively reconstruct the encoded image. For example, at the encoder 300, an INR network may be trained to predict pixel values of an image with dimensions *W* = 256 by *H* = 256 based on the corresponding coordinates. At the decoder 400, pixel values of the image can be predicted by evaluating the trained INR network using: 1) the full coordinate set used for training, including all pairs of *i* ∈ 0,1, ...,255 and *j* ∈ 0,1, ...,255; 2) a subset of the full set, including coordinates from a region of the encoded image; or 3) a first subset of the full set, including coordinates that subsample the image (forming a low-resolution version of the encoded image) and then a second subset including the remaining coordinates. Any set of coordinates can be used to predict the corresponding pixel values, for example, in order to interpolate or to extrapolate the encoded image 310.

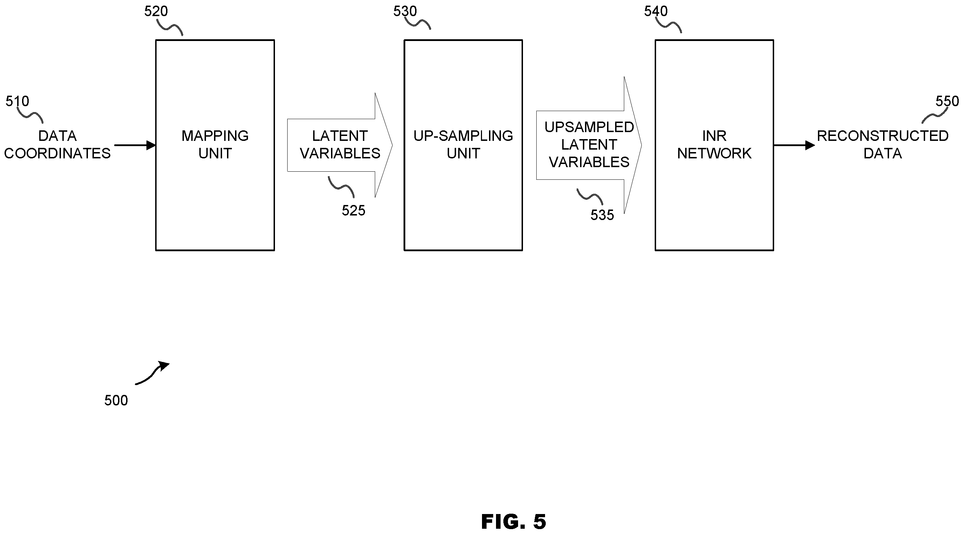

Hybrid INR networks have recently been applied to representing data, including images, videos, 3D objects, and volumetric data, among other applications. In a hybrid INR network, the data coordinates are first mapped into latent variables (or a feature vector). The latent variables are then used as input for the neural network. An example for a hybrid INR network is described in reference to FIG. 5.

FIG. 5 is a diagram illustrating a hybrid INR network 500. In an aspect, this hybrid INR network 500 can be applied by the INR-based encoder 320 of FIG. 3 and the INR-based decoder 440 of FIG. 4. In the example of FIG. 5, during the encoding of input data (that is, the training of the hybrid INR network 500), the input data's coordinates 510 are first mapped, by a mapping unit 520, into latent variables 525. The mapping can be implemented by a lookup table or a hash function, for example. The mapping may also involve any transformation, such as a Fourier transformation, a coordinate transformation, a normalization transformation, or a combination thereof. The obtained latent variables 525 can then be upsampled, by an up-sampling unit 530, resulting in upsampled latent variables 535. The upsampled latent variables are used as an input to an INR network 540 (e.g., such as INR network 200) that is trained to produce the reconstructed data 550. In a hybrid INR network 500 the latent variables 525 can be trained together with the parameters *θ* of the INR network 540, resulting in optimal (learned) network parameters and latent variables. Using such an architecture helps in handling the local attributes of the input data. Indeed, a group of latent variables that correspond to a given region of the data may be uncorrelated with other groups of latent variables that correspond to other regions of the data, and, thus, different groups of latent variables can be tailored to (or be characteristic of) corresponding regions of the data.

Following the training of the hybrid INR network 500 (e.g., by the encoder 320), the learned latent variables 525 and network parameters are quantized (e.g., by the quantizer 330) and coded (e.g., by the entropy-based encoder 340) into the bitstream. Thus, during inference, first the latent variable 525 and the network parameters of the trained INR network 540 are decoded (e.g., by the entropy-based decoder 420) from the bitstream and dequantized (e.g., by the dequantizer 430). Then, the decoded and dequantized latent variables are up-sampled 530. To reconstruct the data 550, the up-sampled latent variables are fed into the trained INR network 540 using the decoded and dequantized network parameters of the INR network.

A hybrid INR network, named a coordinate-based low complexity hierarchical image codec (COOL-CHIC), was proposed by Ladune et al. (see, Ladune et al., "COOL-CHIC: Coordinate-based low complexity hierarchical image codec," International Conference on Computer Vision (ICCV), 2023, hereinafter "Ladune"). In Ladune, the latent variables are arranged in hierarchical layers (or channels) ranging from a low-resolution representation (that provides for compact representation of smooth image regions) to a high-resolution representation (that captures the fine details of the image).

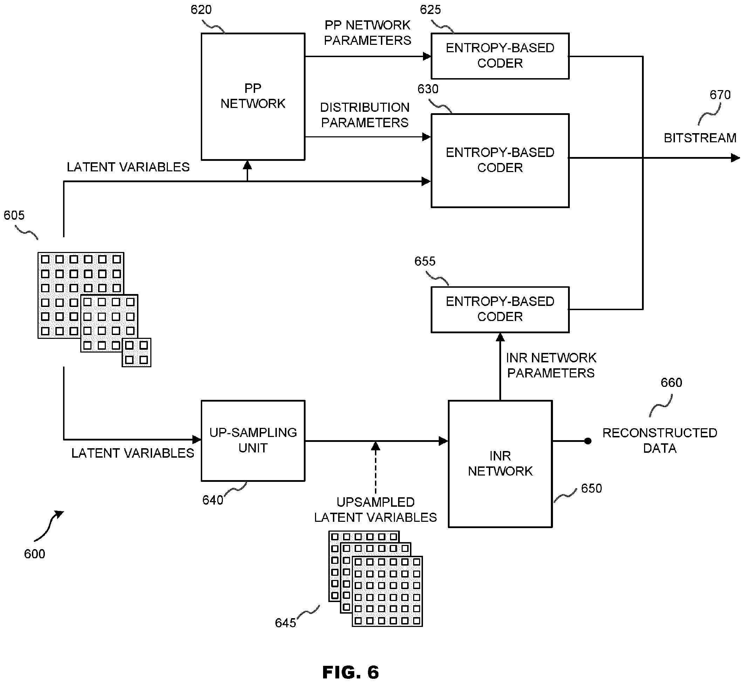

In hybrid INR networks, the latent variables, denoted by *y*, are typically the largest contributor to the bitrate (several orders of magnitude larger than that contributed by the INR network parameters). One approach to reduce the transmission cost of these latent variables is to entropy code these variables based on their learned distributions, as described in Ladune. Principles of the hybrid INR network proposed in Ladune are described below in reference to FIGS. 6-8.

FIG. 6 is a block diagram illustrating an example video encoder 600 applying a hybrid INR network. The encoder 600 includes a probability prediction (PP) network 620, an up-sampling unit 640, an INR network 650, and entropy-based coders 625, 630, 655. The encoder 600 is configured to process latent variables 605 (e.g., latent variables 525 generated by the mapping unit 520 of FIG. 5). The encoder 600 up-samples, by the up-sampling unit 640, the latent variables. Based on these upsampled latent variables 645 the INR network 650 produces reconstructed data 660 (e.g., a reconstructed image of a video frame). To that end, the hybrid INR network is trained, learning optimal latent variables and INR network parameters so that a coding cost is minimized. The learned INR network parameters *θ* are coded, by the entropy-based coder 655, into the bitstream 670. In addition to the network parameters *θ*, the latent variables need to be coded into the bitstream 670. As further explained below, due to their large bit representation, efficient coding of the latent variables calls for the estimation of their distributions. To achieve coding efficiency therefore, the encoder 600 can be further configured to learn the distributions of respective latent variables using the PP network 620 - that is, a network trained to produce parameters of distributions of respective latent variables. Based on these learned distribution parameters the entropy-based coder 630 codes the latent variables into the bitstream 670. The PP network is defined by PP network parameters, denoted by ψ, determined during the training of the PP network 620. The entropy-based coder 625 codes these PP network parameters into the bitstream 670. Note that in the example of FIG. 6, while the entropy-based coder 630 that codes the latent variables relies on their learned respective distributions, the other entropy-based coders 625, 655 that code the PP network parameters and the INR network parameters may rely on respective non-learned distributions. In an aspect, for some of the latent variables, respective non-learned distributions can be used by the entropy-based coder 630. These non-learned distributions may be fixed distributions or may be distributions that was learned with respect to other latent variables (e.g., latent variables representing data from previous frames or other data regions).

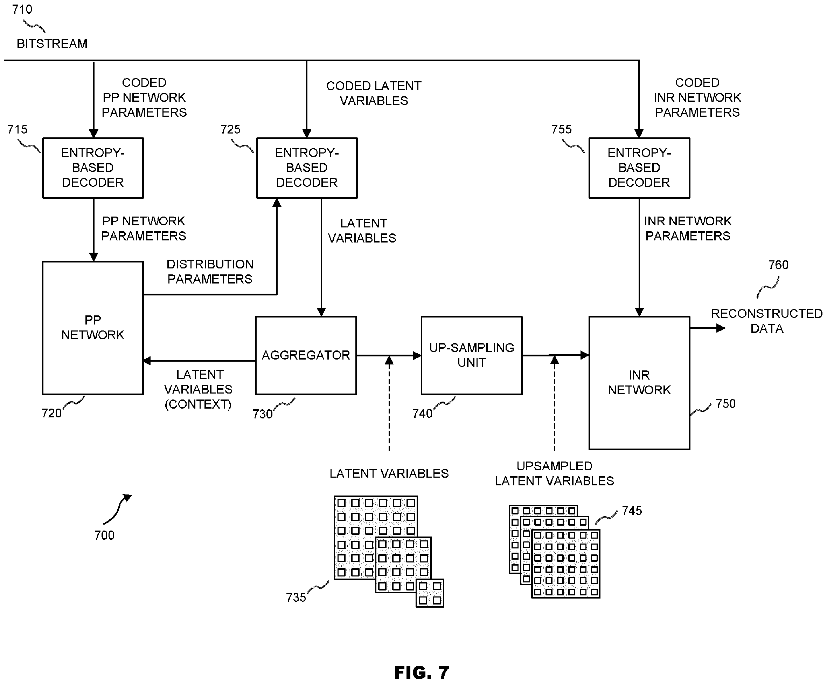

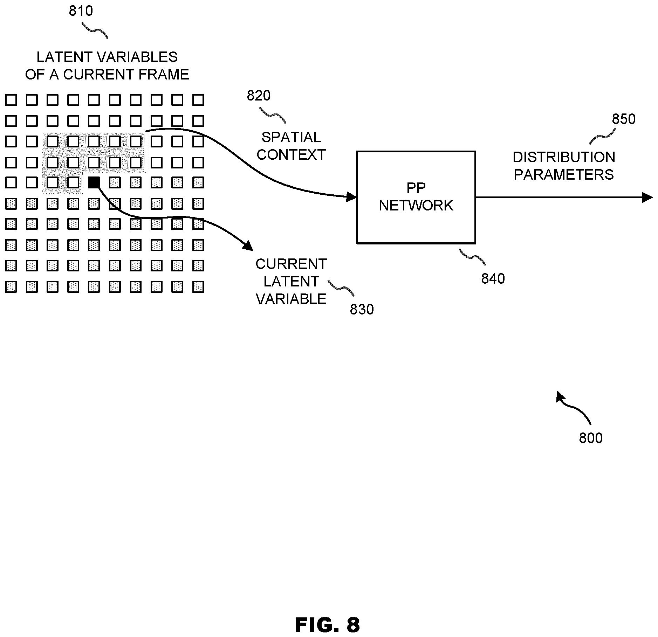

FIG. 7 is a block diagram illustrating an example video decoder applying a hybrid INR network 700. The decoder 700 includes a PP network 720, an aggregator 730, an up-sampling unit 740, an INR network 750, and entropy-based decoders 715, 725, 755. The PP network 720 produces distribution parameters (i.e., distributions) of respective latent variables. The PP network 720 operates based on learned PP network parameters ψ, determined during the training of the PP network 620. The entropy-based decoder 715 decodes these PP network parameters from the bitstream 710. Based on the produced 720 distributions, the entropy-based decoder 725 decodes the latent variables from the bitstream 710. These latent variables are aggregated, by the aggregator 730, forming the layers of the latent variables 735. As shown, already decoded latent variables are provided by the aggregator 730 to the PP network 720 to serve as a context in producing the distribution parameters of the currently decoded 725 latent variable (as further described in reference to FIG. 8). The aggregated latent variables 735 are then upsampled by the up-sampling unit 740. Fed by the up-sampled latent variables, the INR network 750 reconstructs the data 760 (e.g., a reconstructed image of a video frame) it is trained to synthesize based on the INR network parameters, decoded from the bitstream 710 by the entropy-based decoder 755.

The operation of the hybrid INR network is further explained with respect to an image ***x*** of a video frame, however, ***x*** may represent other types of data (such as a surface or a volume) that can be associated with a frame. Note that latent variables representative of data regions (e.g., pixels) from a data frame (e.g., a video frame) also correspond to that data frame.

As illustrated, the INR network 650, 750 utilizes a hierarchical representation of latent variables that includes multiple layers of different spatial resolutions 605, 735. Each layer represents an image ***x**,* of a width *W* and of a height *H,* with a corresponding level of detail. Formally, the discrete latent variables, denoted by *ŷ*, can include *K* layers of latent variables: *ŷ*= {*ŷₖ*, *k =* 0: (*K* - 1)}. Each layer *ŷₖ* is of width *W* /2*^{k}* and of height *H* /2*^{k}.* During the up-sampling 640, 740, each layer *ŷₖ* may be upsampled by a factor of *2^{k}* (using any interpolation method) to obtain the upsampled layer version, denoted by *ẑₖ*. Together, the upsampled layers, *ẑ =* {*ẑₖ* , *k* = 0: (*K* - 1)}, result in a dense 3D representation 645, 745 of dimension *W* by *H* by K. Thus, the INR network 650 can be trained based on *W* by *H* inputs of *ẑ*(i, j), where each input can include up to *K* latent variables, that is, *ẑ*(i, j) = {*ẑ*(i, j, *k*), *k* = 0: (*K* - 1))}. And the trained INR network 750 can be used to predict a reconstructed pixel ***x̂***(*i, j*), of the original pixel ***x***(*i,j*), based on *ẑ*(i, j), that is, ***x̂***(*i, j*) *= f**_{θ}***(*ẑ*(i*,* j)). In an aspect, depending on the desired bitrate, not all the layers of the latent variables may be used to represent (code) an image ***x***.

When compressing an image ***x***, the goal is to do so while minimizing a coding cost, as discussed with respect to equation (2). In the case of a hybrid INR network, the cost of coding an image can be expressed by the following cost function: $Cost = D \left(x,{f}_{θ}\left(\hat{z}\right)\right) + λR \left(\hat{y}, θ, ψ\right) ,$ where *x* denotes an image to be coded of *H* hight, *W* width, and *F* color channels; where *ŷ* denotes the quantized latent variables and *ẑ* denotes their upsampled version; where *f**_{θ}*** denotes the INR network 650, 750 and *θ* denotes the INR network parameters; where *f*_{ψ} denotes the PP network 620, 720 and ψ denotes the PP network parameters; where *D* denotes a distortion measuring the distance between the image ***x*** and its reconstructed version ***x̂***, as produced by the INR network *f**_{θ}*** from the upsampled latent variables *ẑ*, that is, ***x̂*** *= f**_{θ}***(*ẑ*); and where *R* denotes the rate (in bits per pixel) measuring the number of bits that are required to represent a pixel in a bitstream, that is, the number of bits that are required to represent *ŷ*, *θ*, and ψ. The distortion *D* and the rate *R* are balanced by a scalar value denoted by *λ*. In a case where the up-sampling unit 640 is implemented by a neural network, the parameters of that network are also learned and coded into the bitstream 670 to be used by the up-sampling unit 740 when used in an inference mode.

When coding the image ***x***, therefore, the objective is to find these latent variables *ŷ*, INR network parameters *θ*, and PP network parameters ψ that minimize the coding cost, as follows: ${min}_{\hat{y} , θ , ψ} Cost = {min}_{\hat{y} , θ , ψ} \left(D\left(x,{f}_{θ}\left(\hat{z}\right)\right)+λR\left(y, θ, ψ\right)\right) .$ Since the contribution of the INR network parameters *θ* and the PP network parameters ψ to the rate *R* is not as significant as that of the latent variables *ŷ*, only the latter can be considered when minimizing the coding cost, that is, *R*(*ŷ*, *θ*, ψ ) ≈ *R*(*ŷ*)*.* Furthermore, *R*(*ŷ*) can be replaced by the cross entropy. Thus, equation (5) can be replaced by: ${min}_{\hat{y} , θ , ψ} Cost = {min}_{\hat{y} , θ , ψ} \left(D\left(x,{f}_{θ}\left(\hat{z}\right)\right)-λ{log}_{2}{P}_{ψ}\left(\hat{y}\right)\right) ,$ where *P*_{ψ}(*ŷ*) is the joint distribution of the latent variables *ŷŷ*.

According to Equation (6), minimizing the coding cost involves minimizing the rate associated with the latent variables. This can be achieved by reducing the amount of information contained in the latent variables at the cost of a less accurate reconstruction (as less information in *ŷ* is likely to increase the distortion *D*). Alternatively, minimizing the coding cost can be achieved by exploiting the distributions of the respective latent variables for their entropy-based coding, as described herein.

Due to the high dimensionality of the latent variables, modeling of the joint distribution of *ŷ*, *P*_{ψ}(*ŷ*), is not tractable. Instead, *P*_{ψ}(*ŷ*) can be factorized as follows: ${P}_{ψ} \left(\hat{y}\right) = {\prod }_{i , j , k} {p}_{ψ} \left({\hat{y}}_{ijk}\left|{c}_{ijk}^{s}\right.\right) ,$ where ${p}_{ψ} \left({\hat{y}}_{ijk}\left|{c}_{ijk}^{s}\right.\right)$ denotes a discrete conditional probability of a latent variable at position (i, j, k) conditioned on a corresponding spatial context ${c}_{ijk}^{s}$. Where (i, j) represents the spatial coordinate of a latent variable in a layer *k*. Thus, the rate R can be expressed by $R \left(\hat{y}, θ, ψ\right) = - {\sum }_{ijk} {log}_{2} {p}_{ψ} \left({\hat{y}}_{ijk}\left|{c}_{ijk}^{s}\right.\right) ,$ And the coding cost, therefore, can be expressed by ${min}_{\hat{y} , θ , ψ} Cost = {min}_{\hat{y} , θ , ψ} \left(D\left(x,{f}_{θ}\left(\hat{z}\right)\right)-λ{\sum }_{ijk} {log}_{2} {p}_{ψ} \left({\hat{y}}_{ijk}\left|{c}_{ijk}^{s}\right.\right)\right) .$

In practice, the discrete distribution ${p}_{ψ} \left({\hat{y}}_{ijk}\left|{c}_{ijk}^{s}\right.\right)$ can be modeled by integrating the continuous distribution of the non-quantized latent variable. The continuous distribution of the non-quantized latent variable, denoted by *g*(*y*), can be modeled as a Laplacian distribution, for example. In this case, the PP network 620 learns the expectation parameter, µᵢⱼₖ, and the scale parameter, σᵢⱼₖ, based on the context ${c}_{ijk}^{s}$. Accordingly, the probability of a latent variable *ŷᵢⱼₖ* can be expressed as: ${p}_{ψ} \left({\hat{y}}_{ijk}\left|{c}_{ijk}\right.\right) = {\int }_{{\hat{y}}_{ijk} - 0.05}^{{\hat{y}}_{ijk} + 0.5} g \left(y\right) dy ,$ where g ≅ (µᵢⱼₖ, σᵢⱼₖ) denotes a Laplacian distribution. Thus, in the case of a Laplacian distribution, for example, given a context cᵢⱼₖ, the PP network 620 can be trained to produce the corresponding distribution parameters, that is, {µᵢⱼₖ, σᵢⱼₖ} = f_{ψ}(cᵢⱼₖ).

Thus, to obtain the distribution ${p}_{ψ} \left({\hat{y}}_{ijk}\left|{c}_{ijk}^{s}\right.\right)$ of a currently processed latent variable *ŷᵢⱼₖ,* the spatial context ${c}_{ijk}^{s}$ may be provided by neighboring latent variables. For example, during the decoding process 700, the PP network 720 produces the distribution ${p}_{ψ} \left({\hat{y}}_{ijk}\left|{c}_{ijk}^{s}\right.\right)$ of a latent variable *ŷᵢⱼₖ* (to be decoded from the bitstream 710 by the entropy-based decoder 725) using spatial context ${c}_{ijk}^{s}$ provided by already decoded neighboring latent variables received from the aggregator 730. Preferably, the neighboring latent variables are selected in a way that enables parallel decoding of the different layers of the latent variables (e.g., in a wavefront-like approach).

FIG. 8 is a diagram illustrating the prediction of a latent variable distribution, using a spatial context 800. For the simplicity of the presentation, only one layer 810 of the latent variables is illustrated; however, processes applied to this layer can be similarly applied to the other layers. The example of FIG. 8 illustrates the process of predicting a distribution of a current latent variable (indicated by a black square) to be coded (e.g., by encoder 600) or to be decoded (e.g., by decoder 700). Note that when coding the latent variable, typically, neighboring latent variables from the current frame are available. While when decoding the latent variable, typically, some of the neighboring latent variables from the current frame are not yet available (decoded). This is indicated by the white squares (available latent variables) and the patterned squares (not yet available latent variables).

As illustrated, a spatial context 820 can be constructed based on the latent variables in the spatial neighborhood of the current latent variable 830 - that is, for a current latent variable *ŷᵢⱼₖ*at position (*i*, *j*, *k*), latent variables can be selected within a neighborhood located relative to position (*i, j, k*) (e.g., latent variables grouped by the gray background in FIG. 8) to form the spatial context ${c}_{ijk}^{s}$. The obtained spatial context, ${c}_{ijk}^{s}$, can then be used by the PP network 840 to predict the distribution of the current latent variable, that is, predicting ${p}_{ψ} \left({\hat{y}}_{ijk}\left|{c}_{ijk}^{s}\right.\right)$. The distribution of the current latent variable can be predicted by estimating the parameters of that distribution (e.g., {µᵢⱼₖ, σᵢⱼₖ}). To that end, in the encoder 600, the PP network 840, 620 can be trained to produce, for each latent variable, the distribution parameters 850 based on the respective spatial context. This training can be done by minimizing the coding cost expressed in equation (9). The training of the PP network 840, 620 results in the PP network parameters ψ. In the decoder 700, the trained PP network 840, 720 can be operated in an inference mode to produce, for each latent variable, the distribution parameters 850 from the respective spatial context 820. The trained PP network 840, 720 operates based on the PP network parameters ψ determined by the encoder during training and provided to the decoder in the bitstream 710.

In the case of a video stream, for example, a hybrid INR network can be used to represent each image of a video frame by a set of latent variables, *ŷ*, that (together with the PP network parameters ψ and the INR network parameters θ) can be coded into a bitstream. To decrease the bitrate of the compressed video, the set of latent variables can be trained to represent a group of video frames (see, e.g., Hyunjik et al., "C3: High-Performance and Low-Complexity Neural Compression from a Single Image or Video," Proceedings of the IEEE/CVF Conference on Computer Vision and Pattern Recognition (CVPR), 2024, pp. 9347-9358). However, such an approach makes it difficult to randomly access individual frames at the decoder end. In addressing this shortcoming, Leguay et al. propose a predictive hybrid INR network applicable to individual frames (see, Leguay et al., Cool-chic video: Learned video coding with 800 parameters, Data Compression Conference (DCC) 2024, IEEE, pp 23-32, 2024, hereinafter "Leguay"). Principles of the predictive hybrid INR network proposed in Leguay are described in EP Patent Application 24306384.9, filed on August 21, 2024, which is incorporated herein by reference in its entirety.

The entropy coding 630 of the latent variables in a hybrid INR network (e.g., as described with reference to FIG. 6) is similarly applied throughout each frame of data. However, in regions of a data frame with low-resolution content, corresponding latent variables from high resolution layers typically contain little to no information. Using these latent variables to represent low resolution content introduces unnecessary complexity associated with the bitrate caused by their coding and/or the processing time required for their decoding.

One approach to reduce that unnecessary complexity is to analyze the latent variables to obtain a measure of their representative significance. Based on such analysis, only a portion of the latent variables can be considered, that is, enabled, as indicated by a binary mask. In this approach, only the enabled latent variables are used in the training of the hybrid INR network. This approach, including techniques for generating the mask, is described in EP Application 24307197.4, filed December 19, 2024, which is incorporated herein by reference in its entirety.

According to aspects described herein, an encoder is configured to select which latent variables should be disabled, and, therefore, should not be coded into the bitstream. Furthermore, the encoder signals to the decoder which latent variables are coded into the bitstream. To recover the disabled latent variables, the decoder can use their respective distributions. That is, the decoder can derive a latent variable (not coded into the bitstream) from its distribution by, for example, using statistics (such as, a mean, a median, or a most probable value) derived from that distribution.

In the encoder, a mask, identifying the enabled (or disabled) latent variables, can be coded into the bitstream transmitted to the decoder. Hence, for K layers of latent variables, *ŷ* = {*ŷₖ* , *k* = 0: (*K -* 1)}, corresponding layers of the mask can be generated, denoted *M =* {*mₖ* , *k* = 0: (*K* - 1)} - that is, for each latent variable *ŷᵢⱼₖ* a corresponding mask element is generated *mᵢⱼₖ* ∈ {0,1}. When, for example, *mᵢⱼₖ* = 0, the corresponding latent variable *ŷᵢⱼₖ* is not coded into the bitstream. And so, in the decoder, the value of this latent variable *ŷᵢⱼₖ* can be derived from the respective distribution. When *mᵢⱼₖ* = 1, the corresponding latent variable *ŷᵢⱼₖ* is coded into the bitstream and can be decoded therefrom.

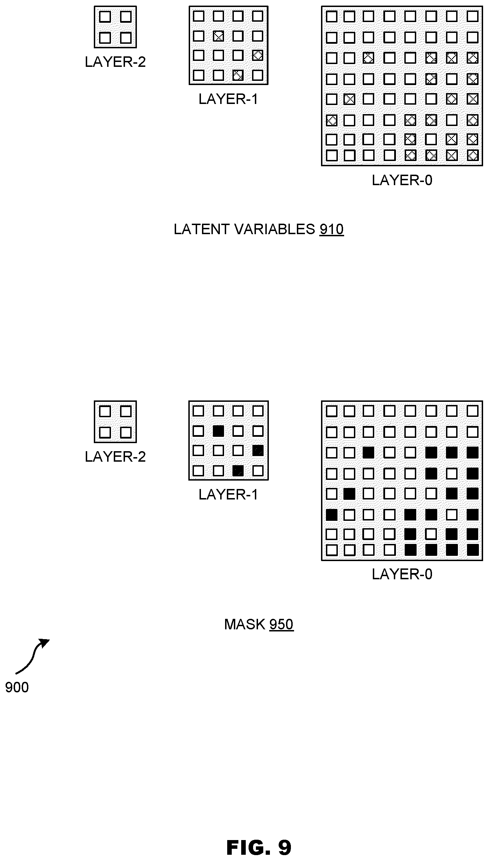

FIG. 9 is a block diagram illustrating layers of latent variables and corresponding layers of a mask 900. In the example of FIG. 9, three layers of latent variables 910 are used, where layer-0 contains 64 latent variables, layer-1 contains 16 latent variables, and layer-2 contains 4 latent variables. Additionally shown are three corresponding layers of a mask 950, where layer-0 of the mask corresponds to layer-0 of the latent variables, layer-1 of the mask corresponds to layer-1 of the latent variables, and layer-2 of the mask corresponds to layer-2 of the latent variables. In the coarser level, all elements of layer-2 of the mask are set to 1 (illustrated by white squares). Therefore, in this case, all latent variables in this layer-2 are to be coded into the bitstream. In the intermediate level, three elements of layer-1 of the mask are set to 0 (illustrated by the black squares). This is to indicate that corresponding latent variables in layer-1 (illustrated by patterned squares) are not to be coded into the bitstream. The other latent variables in layer-1 (illustrated by white squares) are to be coded into the bitstream. In the finer level, twenty elements of layer-0 of the mask are set to 0 (illustrated by the black squares). This is to indicate that the corresponding latent variables in layer-0 (illustrated by patterned squares) are not to be coded into the bitstream. Thus, in an aspect, a latent variable *ŷᵢⱼₖ* for which the corresponding mask element *mᵢⱼₖ* is set to 1, is coded into the bitstream, by an entropy-based coder, using the respective distribution (as defined by the distribution parameters predicted by the PP network). While a latent variable *ŷᵢⱼₖ* for which the corresponding mask value *mᵢⱼₖ* is set to 0 is not coded into the bitstream, but derived based on the respective distribution.

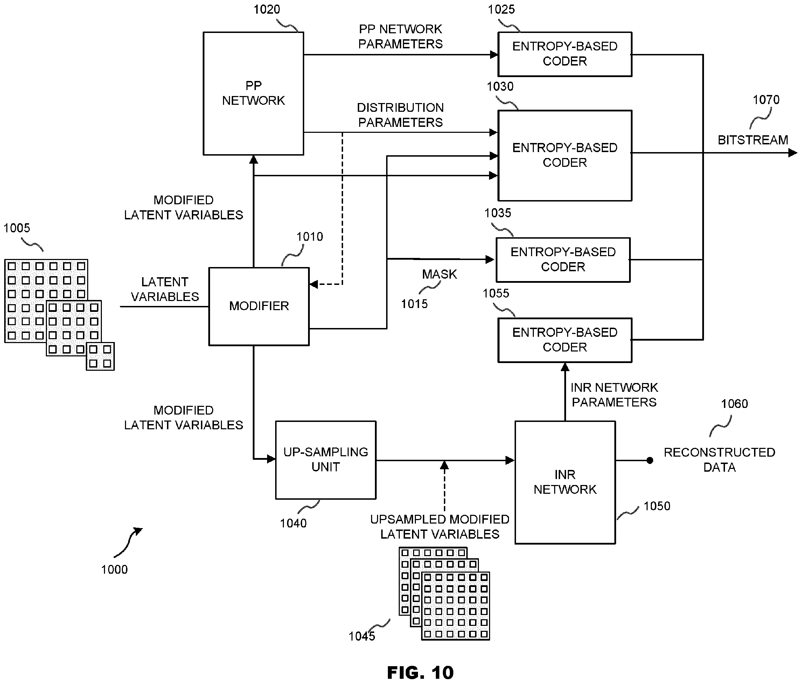

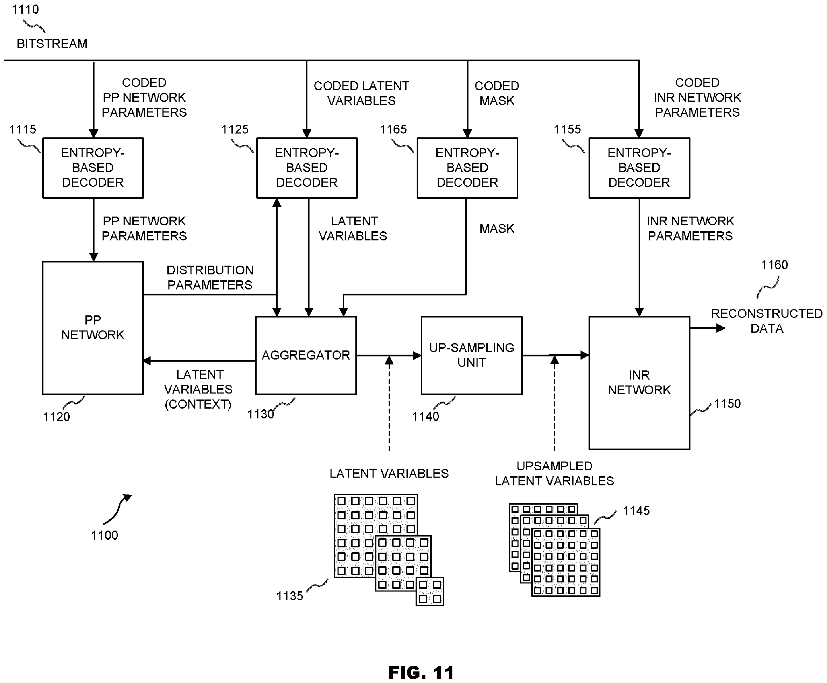

The selective treatment of the latent variables, facilitated by the mask 950, is next described with respect to the encoding process, in reference to FIG. 10, and with respect to the decoding process, in reference to FIG. 11. Note that these encoder 1000 and decoder 1100 generally operate as the encoder 600 and decoder 700 of FIG. 6 and FIG. 7, respectively, except for aspects associated with the selective coding and decoding of the latent variables, as further described below.

FIG. 10 is a block diagram illustrating an example video encoder applying a hybrid INR network with selective coding of latent variables 1000. The encoder 1000 includes a modifier 1010, a probability prediction (PP) network 1020, an up-sampling unit 1040, an INR network 1050, and entropy-based coders 1025, 1030, 1035, 1055. The encoder 1000 is configured to process latent variables 1005 (e.g., latent variables 525 generated by the mapping unit 520 of FIG. 5). Using a mask, the latent variables are modified (or constrained) by the modifier 1010, outputting the modified latent variables. In addition, the modifier 1010 outputs the mask 1015 used to modify the latent variables (or a version thereof). The latent variables can be modified, as further discussed below, according to equation (11) or equation (14), using distribution parameters provided by the PP Network. The mask may be learned by the hybrid INR network together with the latent variables and parameters of the networks 1020, 1050, as further described below. In an aspect, the mask may be obtained by the encoder from an external source and may either be fixed (to externally control what latent variables are coded) or be adjusted (by the modifier 1010) through the training process for example. A mask obtained from a source external to the encoder 1000 may be computed based on the characteristics of the data frame being encoded, such as, texture (color) features, geometric features, saliency features, or any statistics that can be derived from the data frame.

The encoder 1000 up-samples, by the up-sampling unit 1040, the modified latent variables. Based on these upsampled latent variables 1045 the INR network 1050 produces reconstructed data 1060 (e.g., a reconstructed image of a video frame). To that end, the hybrid INR network can be trained, learning optimal latent variables, mask elements, and INR network parameters so that a coding cost (e.g., equation (13)) is minimized. The learned INR network parameters *θ* are coded, by the entropy-based coder 1055, into the bitstream 1070. In addition to the network parameters *θ*, latent variables need to be coded into the bitstream 1070. As explained herein, due to their large bit representation, efficient coding of the latent variables calls for the estimation of their distributions. To achieve coding efficiency therefore, the encoder 1000 can be further configured to learn the distributions of respective latent variables using the PP network 1020 - that is, a network trained to produce parameters of distributions of respective latent variables. The PP network is defined by PP network parameters, denoted by ψ, determined during the training of the PP network 1020. The entropy-based coder 1025 codes these PP network parameters into the bitstream 1070.

According to aspects, latent variables enabled by the mask - latent variables *ŷᵢⱼₖ* for which the corresponding mask element *mᵢⱼₖ* is set to 1 - are encoded into the bitstream 1070. Thus, based on their respective learned distributions, provided by the PP network 1020, the entropy-based coder 1030 codes the enabled latent variables (as indicated by the mask 1015) into the bitstream 1070. Note that in the example of FIG. 10, while the entropy-based coder 1030 (that codes the latent variables) relies on learned distributions, the other entropy-based coders 1025, 1035, 1055 that, respectively, code the PP network parameters, the mask 1015, and the INR network parameters may rely on non-learned distributions. In an aspect, for some of the latent variables, respective non-learned distributions can be used by the entropy-based coder 1030. These non-learned distributions may be fixed distributions or may be distributions that were learned with respect to other latent variables (e.g., latent variables representing data from previous frames).

To code data, using the hybrid INR network, a coding cost should be minimized (e.g., as explained with respect to equations (4)-(10)). However, to do so while selectively coding the latent variables, the coding cost should take into account the latent variables as modified by the mask. According to aspects, the latent variables and the mask can be learned during the training of the hybrid INR network, as further described below.

In a first aspect, the mask is trained together with the latent variables (as well as the parameters of the INR network 1050, and, possibly, the parameters of the PP network 1020). To that end, the coding cost (e.g., equation (9)) can be adapted to enforce the sparsity constraint introduced by the mask. To do so, both the rate *R* and the distortion *D* can be adapted, as described below.

Applying to a latent variable, *ŷᵢⱼₖ*, the corresponding mask element, *mᵢⱼₖ*, the latent variable may be modified as follows: $\hat{y} {′}_{ijk} = {μ}_{ijk} \left(1-{m}_{ijk}\right) + {\hat{y}}_{ijk} {m}_{ijk} .$ Notice that when *mᵢⱼₖ* = 0 (the case, where the latent variable is not to be coded into the bitstream), *ŷ*'*ᵢⱼₖ* = *µᵢⱼₖ*. However, any function of the distribution of the latent variable can be used to derive (or infer) the latent variable when *mᵢⱼₖ* = 0. For example, such a function may yield the expected value (i.e., the mean *µᵢⱼₖ*, as demonstrated in equation (11)) or any other statistic such as a median or a most probable value.

The modified latent variables, collectively denoted by *ŷ*', are then upsampled 1040 to obtain the upsampled modified latent variables 1045, collectively denoted by *ẑ*'. The distortion, therefore, is adapted to *D*(***x**, f**_{θ}***(*ẑ'*)). Similarly, with respect to the rate, the contribution of a latent variable to the rate depends on the corresponding mask element and on the respective context, denoted $c {′}_{ijk}^{s}$. Thus, the modified rate can be expressed as: $R ′ \left(\hat{y}, θ, ψ\right) = - {\sum }_{ijk} {m}_{ijk} {log}_{2} {p}_{ψ} \left({\hat{y}}_{ijk}{\left|c′\right.}_{ijk}^{s}\right) .$ Note that the context $c {′}_{ijk}^{s}$ is formed by modified latent variables in the neighborhood of *ŷᵢⱼₖ*, but may be formed by unmodified latent variables, that is, $c {′}_{ijk}^{s} = {c}_{ijk}^{s}$, or may be formed by a combination of modified and unmodified latent variables. Thus, the coding cost to be minimized is: ${min}_{\hat{y} , θ , ψ} Cost = {min}_{\hat{y} , θ , ψ} \left(D\left(x,{f}_{θ}\left(\hat{z}′\right)\right)-λ{\sum }_{ijk} {m}_{ijk} {log}_{2} {p}_{ψ} \left({\hat{y}}_{ijk}{\left|c′\right.}_{ijk}^{s}\right)\right) .$ The optimization of this coding cost is combinatorial and can be solved using, for example, a greedy search, an exhaustive search, genetic algorithms, or using machine learning algorithms.

In a second aspect, the mask can be trained indirectly. For example, an auxiliary mask *M̃* may be trained instead of *M.* The auxiliary mask's elements may be of any continuous value within a range, for example, *mᵢⱼₖ* ∈ [0,1]. In this case, the modified latent variables are: $\hat{y} {′}_{ijk} = {μ}_{ijk} \left(1-{{m}^{˜}}_{ijk}\right) + {\hat{y}}_{ijk} {{m}^{˜}}_{ijk} ,$ and the coding cost to be minimized is: ${min}_{\hat{y} , θ , ψ} Cost = {min}_{\hat{y} , θ , ψ} \left(D\left(x,{f}_{θ}\left(\hat{z}′\right)\right)-λ{\sum }_{ijk} {{m}^{˜}}_{ijk} {log}_{2} {p}_{ψ} \left({\hat{y}}_{ijk}{\left|c′\right.}_{ijk}^{s}\right)\right) .$ After training, a function *T* may be applied to the auxiliary mask elements that approximates binarization operation - that is, *mᵢⱼₖ = T*(*m̃ᵢⱼₖ*). Thus, the auxiliary mask elements *m̃ᵢⱼₖ* ∈ [0,1] can be binarized to obtain binary mask elements, *mᵢⱼₖ* ∈ {0,1}.

In a variant, in a first stage, the training of the hybrid INR network is carried out using the auxiliary mask. And, in a second stage, the hybrid INR network is further trained, starting with a binarized version of the learned auxiliary mask (that is, initializing the mask elements with the binarized learned elements of the auxiliary mask). Thus, while in the first stage the coding cost according to equation (15) can be minimized, in the second stage, the coding cost according to equation (13) can be minimized.

In a third aspect, the training of the hybrid INR network can be perform using multiple stages. For example, in a preliminary stage of the training, the latent variables are not constrained by any mask - that is, the minimized coding cost is a function of the latent variables, unmodified by corresponding elements of the mask (e.g., the coding cost according to equation (9) can be minimized). Then, in a following one or more stages of the training, the latent variables are constrained by a mask - that is, the minimized coding cost is a function of the latent variables modified by corresponding elements of the mask (e.g., the coding cost according to equation (13) and/or equation (15) can be minimized).

Furthermore, the hybrid INR network can be initially trained without the application of a mask, and then, further training can be carried out by gradually applying some or all the elements of a mask (e.g., M or *M̃*). For example, the mask elements may be applied to the corresponding latent variables incrementally, starting with an all-ones mask, *M*₀, and then iteratively setting one or more elements of the mask to zero, obtaining *Mₗ* for iteration *l.* This process may be performed while evaluating the impact on the coding cost. For example, in iteration *l,* different variation to *M*_{*l*-1} can be tested to obtain *Mₗ*, wherein in each variation a different set of mask elements are set from one to zero. The variation that leads to a larger reduction in the coding cost may be selected to form *Mₗ.* Generally stated, in each iteration *l,* one or more elements of a mask obtained in a previous iteration *M*_{*l*-1} can be modified to obtain a current mask *Mₗ*, where the modification is performed so that a corresponding coding cost is lower than the coding cost corresponding to the mask obtained in the previous iteration.

In an aspect, the total number of latent variables that are enabled by the mask can be limited. For example, such a limitation may be driven by constraints on the number of possible entropy decoding operations by the entropy-based decoder 1125 at the decoder 1100. Thus, for example, the number of latent variables (selected as indicated by the mask to be coded into the bitstream) may be further reduced to a maximum number of latent variables that are permitted to be coded into the bitstream.

In another aspect, the mask's elements may be provided by a neural network. For example, the modifier 1010 may include a neural network, namely, a mask network, that receives as an input distributions of respective latent variables (provided by the PP network 1020) and/or the latent variables 1005 and their corresponding contexts. The training of the mask network may be part of the training of the hybrid INR network and its learned parameters should also be coded into the bitstream 1070. If such a mask network is used to generate the mask, a thresholding function can be used to map the output of the network to {0,1}. In some variants, the parameters of or the type of the thresholding function may also be optimized and coded into the bitstream 1070 as well as one or more threshold values.

In yet another aspect, the encoder 1000 may select to activate only one or some of the mask's layers. In this case, a syntax element identifying the activated mask layers should be encoded into the bitstream. In some variants, only one or more portions of the mask, corresponding to latent variables representing respective regions of the data frame (such as a block, a slice, a coding tree unit or a coding unit) may be activated by the encoder 1000. In this case, a syntax element identifying the activated one or more mask portions should be encoded into the bitstream.

Following the training of the hybrid INR network, in an aspect, the trained parameters of the PP network 1020, the INR network 1050 (and, if implemented by a neural network, the up-sampling network 1040) may be encoded into the bitstream 1070 using a neural compression codec such as Neural Network Coding (NNC)/ ISO/IEC 15938-17 or MPEG-7 part 17 or simply by quantizing the trained parameters and/or pruning some of them based on their associated nodes in the respective networks.

As mentioned above, the mask 1015 is encoded into the bitstream 1070. This may involve the use of an entropy-based coder 1035. Alternatively, the mask may be coded using a codec that encodes tensors such as Neural Network Coding (NNC)/ ISO/IEC 15938-17 or MPEG-7 part 17. (1240). In a variant, the elements of the mask 1015 may be encoded one element at a time using a binary arithmetic coding procedure, such as Context Adaptive Binary Arithmetic Coding (CABAC).

FIG. 11 is a block diagram illustrating an example video decoder applying a hybrid INR network with selective coding of latent variables 1100. The decoder 1100 includes a PP network 1120, an aggregator 1130, an up-sampling unit 1140, an INR network 1150, and entropy-based decoders 1115, 1125, 1155, 1165. The PP network 1120 produces parameters of distributions of respective latent variables. The PP network 1120 operates based on learned PP network parameters, ψ, determined during the training of the PP network 1020. The entropy-based decoder 1115 decodes these PP network parameters from the bitstream 1110. Based on the produced 1120 distribution parameters, the entropy-based decoder 1125 can efficiently decode latent variables from the bitstream 1110. Furthermore, the mask 1015 provided by the encoder 1000, is decoded from the bitstream by the entropy-based decoder 1165. According to aspects, only those latent variables that were enabled by this mask are to be decoded 1125 from the bitstream 1110, as further described below.

The aggregator 1130, aggregates the latent variables based on the mask - when a latent variable corresponds to a mask element that is set to 1, the latent variable is decoded from the bitstream 1110 by the entropy-based decoder 1125 and when a latent variable corresponds to a mask element that is set to 0, the latent variable is derived from the respective distribution provided by the PP network 1120. As shown, already decoded and/or derived latent variables are provided, by the aggregator 1130, to the PP network 1120 to serve as a context in producing the distribution parameters of the currently processed latent variable (as described in reference to FIG. 8). Both decoded and derived latent variables are aggregated 1130 to form the layers of the latent variables 1135 that are next upsampled by the up-sampling unit 1140. Fed by the up-sampled latent variables, the INR network 1150 reconstructs the data 1160 (e.g., a reconstructed image of a video frame) it is trained to synthesize based on the INR network parameters, decoded from the bitstream 1110 by the entropy-based decoder 1155.

Hence, in the decoder 1100, a latent variable is either decoded from the bitstream 1110 or derived (i.e., inferred). In both cases, a respective distribution (predicted by the PP network 1120) is used. The parameters of the respective distribution are obtained based on a context formed by neighboring latent variables that already have been decoded and/or derived (provided by the aggregator 1130). As explained above, a latent variable *ŷᵢⱼₖ* for which *mᵢⱼₖ* = 1 is decoded 1125 from the bitstream 1110 using the respective distribution parameters provided by the PP network 1120, and a latent variable *ŷᵢⱼₖ* for which *mᵢⱼₖ* = 0 is not decoded from the bitstream. Instead, its value can be derived from the respective distribution parameters provided by the PP network 1120. For example, the latent variable can be derived as a function of the distribution (as defined by the predicted distribution parameters) of that latent variable. Such a function may yield the expected value (i.e., the mean *µᵢⱼₖ*) or any other statistic such as the median or the most probable value.

When the mask 1015 is generated by a neural network, the parameters of that neural network may be decoded from the bitstream 1110 and used by the neural network, for example, by applying this neural network to the output of the PP network 1120 and/or to the aggregated latent variables and their respective contexts. A threshold value used to binarize the generated mask may also be decoded from the bitstream.

In the case where one or more layers of the mask are activated or one or more portions of the mask (corresponding to latent variables representing respective regions of the data frame) are activated, corresponding syntax elements should be decoded from the bitstream 1110 to identify these activated layers and/or portions of the mask.

In an aspect, a weight mask, denoted *M̂*, can be used to indicate different weight values for λ (e.g., in equation (9)). The purpose of such mask is to indicate that some latent variables *ŷᵢⱼₖ* are to be trained with different weight values for λ when *m̂ᵢⱼₖ* = 0 and when *mᵢⱼₖ =* 1. For example, a weight *λᵢⱼₖ* may be given by: ${λ}_{ijk} = λ ′ - \left(1-{\hat{m}}_{ijk}\right) \left(λ′-λ′′\right) ,$ and the coding cost to be minimized in this case is: ${min}_{\hat{y} , θ , ψ} Cost = {min}_{\hat{y} , θ , ψ} \left(D\left(x,{f}_{θ}\left(\hat{z}\right)\right)-{\sum }_{ijk} {λ}_{ijk} {log}_{2} {p}_{ψ} \left({\hat{y}}_{ijk}\left|{c}_{ijk}^{s}\right.\right)\right) .$ In a further variant, multiple weight masks may be used to associate the latent variables with different weight values for λ. For example, two masks, *M̂*¹ and *M̂²,* may be used to associate the latent variables with four different weight values for λ. The weight mask(s) can be used alone or can be used together with the mask *M* and/or the auxiliary mask *M̃* according to aspects described herein.

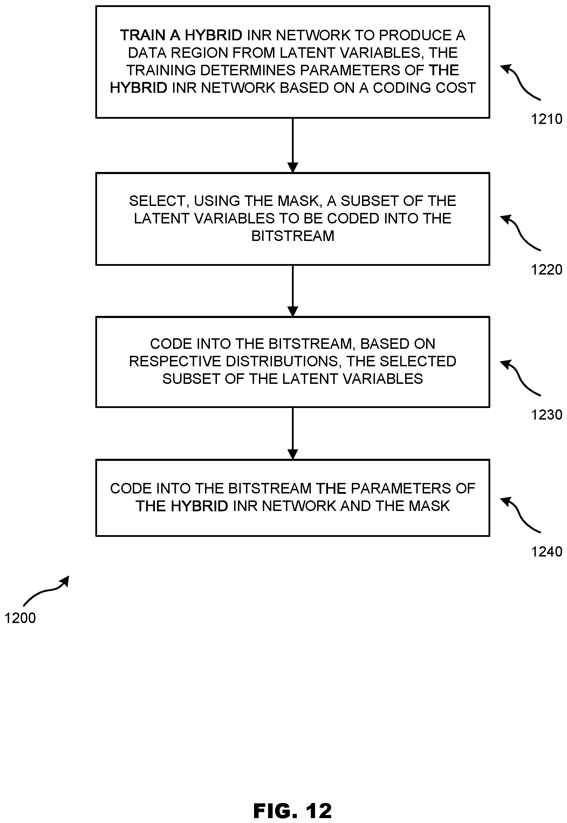

FIG. 12 is a flowchart of an example method for encoding data 1200, according to which aspects of the present embodiments can be implemented. The method 1200 can be applied to encode, into a bitstream, a data region of a currently encoded frame (e.g., using the encoder 1000 described in reference to FIG. 10). The encoded data region may be representative of an image, a volume, or a surface associated with a frame. The method includes steps 1210-1240. In step 1210, a hybrid INR network can be trained to produce the data region (to be encoded) from latent variables, the training determines parameters of the hybrid INR network based on a coding cost. According to aspects, the coding cost is a function of the latent variables modified by corresponding elements of a mask (e.g., see equation (13) or (15)). In step 1220, using the mask, a subset of the latent variables can be selected. The selected subset of the latent variables can then be coded into the bitstream based on their respective distributions, in step 1230, together with the parameters of the hybrid INR network and the mask, in step 1240.

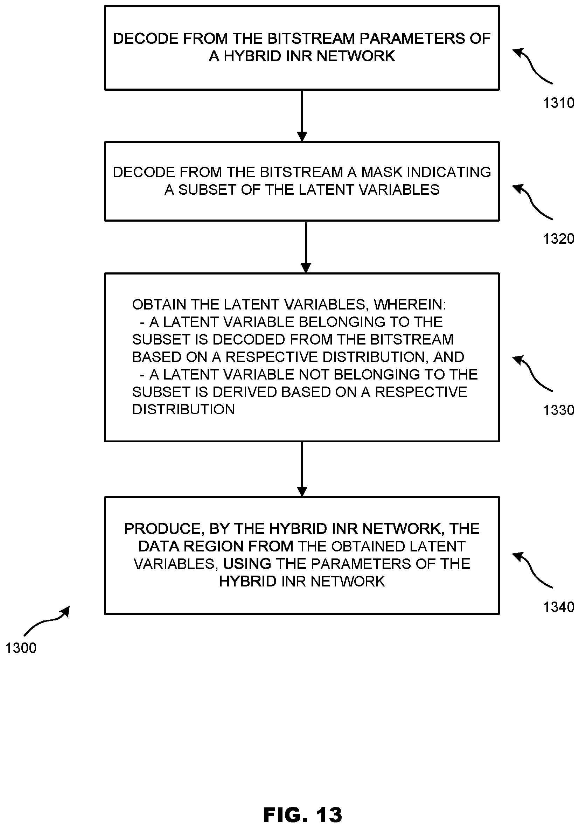

FIG. 13 is a flowchart of an example method for decoding data 1300, according to which aspects of the present embodiments can be implemented. The method 1300 can be applied to decode, from a bitstream, a data region of a currently decoded frame (e.g., using the decoder 1100 described in reference to FIG. 11). The decoded data region may be representative of an image, a volume, or a surface associated with a frame. The method includes steps 1310-1340. In step 1310, parameters of a hybrid INR network can be decoded from the bitstream. The parameters are determined by the training of the hybrid INR network to produce the data region from latent variables. In step 1320, a mask, indicating a subset of the latent variables, can be decoded from the bitstream. Then, in step 1330, the latent variables can be obtained, so that a latent variable that belongs to the subset is decoded from the bitstream based on its respective distribution and a latent variable that does not belong to the subset is derived based on its respective distribution. The data region, in step 1340, can be produced by the hybrid INR network from the obtained latent variables, using the parameters of the hybrid INR network.

The illustrations of the aspects described herein are intended to provide a general understanding of the structure, function, and operation of the various aspects. The illustrations are not intended to serve as a complete description of all of the elements and features of apparatuses and systems that utilize the structures or methods described herein. Many other aspects may be apparent to those of skill in the art upon reviewing the disclosure. Other aspects may be utilized and derived from the disclosure, such that structural and logical substitutions and changes may be made without departing from the scope of the disclosure. Accordingly, the disclosure and the figures are to be regarded as illustrative rather than restrictive.

The description of the aspects is provided to enable the making or use of the aspects. Various modifications to these aspects will be readily apparent, and the generic principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

## Claims

1. A method, comprising:
encoding, into a bitstream, a data region of a currently encoded frame, the encoding comprises:
training a hybrid implicit neural representation (INR) network to produce the data region from latent variables, the training determines parameters of the hybrid INR network based on a coding cost being a function of the latent variables modified by corresponding elements of a mask,
selecting, using the mask, a subset of the latent variables to be coded into the bitstream;
coding into the bitstream, based on respective distributions, the selected subset of the latent variables; and
coding into the bitstream the parameters of the hybrid INR network and the mask.

2. A method, comprising:
decoding, from a bitstream, a data region of a currently decoded frame, the decoding comprises:
decoding from the bitstream parameters of a hybrid INR network, the parameters being determined by training the hybrid INR network to produce the data region from latent variables,
decoding from the bitstream a mask indicating a subset of the latent variables,
obtaining the latent variables, wherein a latent variable belonging to the subset is decoded from the bitstream based on a respective distribution and a latent variable not belonging to the subset is derived based on a respective distribution, and
producing, by the hybrid INR network, the data region from the obtained latent variables, using the parameters of the hybrid INR network.

3. An apparatus, comprising:
at least one processor; and
memory storing instructions that, when executed by the at least one processor, cause the apparatus to encode, into a bitstream, a data region of a currently encoded frame, the encoding comprises:
training a hybrid INR network to produce the data region from latent variables, the training determines parameters of the hybrid INR network based on a coding cost being a function of the latent variables modified by corresponding elements of a mask,
selecting, using the mask, a subset of the latent variables to be coded into the bitstream;
coding into the bitstream, based on respective distributions, the selected subset of the latent variables; and
coding into the bitstream the parameters of the hybrid INR network and the mask.

4. An apparatus, comprising:
at least one processor; and
memory storing instructions that, when executed by the at least one processor, cause the apparatus to decode, from a bitstream, a data region of a currently decoded frame, the decoding comprises:
decoding from the bitstream parameters of a hybrid INR network, the parameters being determined by training the hybrid INR network to produce the data region from latent variables,
decoding from the bitstream a mask indicating a subset of the latent variables,
obtaining the latent variables, wherein a latent variable belonging to the subset is decoded from the bitstream based on a respective distribution and a latent variable not belonging to the subset is derived based on a respective distribution, and
producing, by the hybrid INR network, the data region from the obtained latent variables, using the parameters of the hybrid INR network.

5. The method according to claim 1 or 2, or the apparatus according to claim 3 or 4, wherein the training of the hybrid INR network comprises:
determining the latent variables and corresponding elements of the mask.

6. The method according to claim 1 or 2, or the apparatus according to claim 3 or 4, wherein the training of the hybrid INR network comprises:
determining the latent variables and corresponding elements of an auxiliary mask, the auxiliary mask elements having continuous values within a range; and
deriving the mask from the auxiliary mask by binarization operation.

7. The method according to any one of claims 1, 2, or 5-6, or the apparatus according to any one of claims 3, 4, or 5-6, wherein:
in a preliminary stage of the training of the hybrid INR network, the coding cost is a function of the latent variables, unmodified by corresponding elements of the mask.

8. The method according to any one of claims 1, 2, or 5-7, or the apparatus according to any one of claims 3, 4, or 5-7, wherein the training of the hybrid INR network is performed iteratively, and wherein:
in each iteration, one or more elements of a mask obtained in a previous iteration are modified to obtain a current mask, the modification is performed so that a corresponding coding cost is lower than that corresponding to the mask obtained in the previous iteration.

9. The method according to any one of claims 1, or 5-8, or the apparatus according to any one of claims 3, or 5-8, wherein, the selecting of the subset of the latent variables is further based on a maximum number of latent variables that are permitted to be coded into the bitstream.

10. The method according to any one of claims 1, or 5-9 further comprising, or the apparatus according to any one of claims 3, or 5-9 wherein the instructions further cause the apparatus to perform:
training a mask network to produce elements of the mask from respective distributions of latent variables or from latent variables and their respective contexts, wherein the training determines parameters of the mask network; and
coding into the bitstream the parameters of the mask network.

11. The method according to any one of claims 1, or 5-10 further comprising, or the apparatus according to any one of claims 3, or 5-10 wherein the instructions further cause the apparatus to perform:
training a probability prediction network to produce parameters of respective distributions of the latent variables based on respective contexts, wherein the training determines parameters of the probability prediction network; and
coding, into the bitstream, the parameters of the probability prediction network.

12. The method according to any one of claims 2, or 5-8, or the apparatus according to any one of claims 4, or 5-8, wherein the decoding of the mask from the bitstream comprises:
decoding parameters of a mask network, and
using the decoded parameters, producing, by the mask network, elements of the mask from respective distributions of latent variables or from latent variables and their respective contexts.

13. The method according to any one of claims 2, 5-8, or 12, or the apparatus according to any one of claims 4, 5-8, or 12, wherein a latent variable not belonging to the subset of latent variables is derived from a function of the respective distribution, including an expected value, a median, or a most probable value.

14. The method according to any one of claims 2, 5-8, or 12-13 further comprising, or the apparatus according to any one of claims 4, 5-8, or 12-13 wherein the instructions further cause the apparatus to perform:
decoding from the bitstream a syntax element identifying an activated layer of the mask, wherein the activated layer of the mask further indicates the subset of latent variables.

15. The method according to any one of claims 2, 5-8, or 12-14 further comprising, or apparatus according to any one of claims 4, 5-8, or 12-14 wherein the instructions further cause the apparatus to perform:
decoding from the bitstream a syntax element identifying an activated portion of the mask, wherein the activated portion of the mask further indicates the subset of latent variables.
